# FASCICULE DE BREVET EUROPEEN

(11) **EP 4 308 427 B1**
(45) Date de publication et mention de la délivrance du brevet: **26.03.2025**
(21) Numéro de dépôt: 22708976.0
(22) Date de dépôt: 01.02.2022
(51) Int. Cl.: B60T 17/02, B60T 13/66, B60T 13/72, B60T 17/22

(54) **PROCÉDÉ DE COMMANDE D'UNE POMPE À VIDE D'UN VÉHICULE ÉLECTRIQUE**
VERFAHREN ZUR STEUERUNG EINER VAKUUMPUMPE EINES ELEKTROFAHRZEUGS
METHOD FOR CONTROLLING A VACUUM PUMP OF AN ELECTRIC VEHICLE

(30) Priorité: 16.03.2021 FR 2102579
(43) Date de publication de la demande: 24.01.2024
(73) Titulaire: Stellantis Auto SAS, 78300 Poissy (FR)
(72) Inventeur: BALENGHIEN, Olivier, 93390 CLICHY SOUS BOIS (FR); DE CROUTTE, Arnaud, 78530 BUC (FR)
(74) Mandataire: PSIP
(86) Numéro de dépôt international: PCT/FR2022/050174
(87) Numéro de publication internationale: WO 2022/195178

(56) Documents cités:
- CN-A- 106 218 625
- KR-A- 20030 046 620
- US-A1- 2011 176 931

## Description

La présente invention revendique la priorité de la demande française N°2102579 déposée le 16.03.2021.

La présente invention se situe dans le domaine du pilotage des véhicules électriques et concerne plus particulièrement un procédé de commande d'une pompe à vide d'un véhicule électrique destinée à maintenir une pression de vide dans un réservoir de vide. Le document CN106218625B divulgue un procédé de commande d'une pompe à vide électrique d'un véhicule électrique destinée à maintenir une pression de vide dans un réservoir de vide comme décrit dans le préambule de la revendication 1.

De manière connue, les systèmes de freinage des véhicules automobiles comprennent généralement un amplificateur pneumatique qui permet d'augmenter l'effort transmis par le système hydraulique aux organes de freinage du véhicule. Ces amplificateurs sont connectés à une réserve de vide pneumatique, alimentée par une pompe rotative à vide, qui permet d'assurer en permanence une dépression suffisante dans l'amplificateur de freinage.

Actuellement, sur les véhicules électriques, dès que l'on passe dans l'état «+APC», c'est-à-dire lorsqu'on met le contact, les calculateurs sont alimentés par la batterie de service, mais le convertisseur de tension DC/DC n'est pas mis en fonction.

Le véhicule électrique doit passer à l'état «READY» pour que le convertisseur de tension DC/DC transforme la tension de la batterie de traction entre 350V et 500V en fonction de l'état de charge de la batterie de traction en 13,9V, pour recharger la batterie de service ou au moins soutenir la tension de la batterie de service du véhicule électrique.

En revanche, lorsque le conducteur passe de l'état «OFF» à l'état «+APC», le superviseur du groupe motopropulseur regarde si la réserve de vide est à un niveau acceptable.

Dans le cas où le niveau est inférieur à un niveau acceptable, le superviseur du groupe motopropulseur engage le fonctionnement de la pompe à vide électrique pour remettre la réserve de vide à un niveau acceptable.

Toutefois, lorsque le véhicule électrique reste un peu longtemps à l'état «+APC», par exemple lors des révisions du véhicule ou lors des téléchargements ou si les utilisateurs utilisent la radio sans démarrer le véhicule, alors, la batterie de service est sollicitée pour maintenir alimentés certains calculateurs du véhicule, sans être soutenue par le convertisseur de tension DC/DC.

De ce fait, la tension de la batterie de service se dégrade.

Il s'ensuit que lorsque le superviseur du groupe motopropulseur demande à la pompe à vide électrique de remplir la réserve de vide à un niveau acceptable, cette pompe à vide est souvent alimentée par une tension inférieure à 12,5V.

Comme la tenue de la pompe est garantie pour une tension d'alimentation supérieure à 12,5V, cette pompe se dégrade et finit par dysfonctionner.

L'invention consiste à modifier la stratégie de la mise en marche de la pompe à vide électrique pour interdire le fonctionnement de la pompe à vide électrique quand la tension de la batterie de service est inférieure à 12,5V.

Le but de l'invention est de garantir le fonctionnement de la pompe à vide électrique quand la tension d'alimentation de cette pompe est à une tension supérieure à 12,5V.

En d'autres termes, la demande de fonctionnement de la pompe à vide électrique ne s'effectue qu'à partir du moment où le convertisseur de tension DC/DC transforme la tension de la batterie de traction.

Le but est de garantir le fonctionnement de la pompe à vide électrique uniquement quand la tension du réseau de bord est soutenue par le convertisseur de tension DC/DC.

A cet effet, l'invention a pour objet un procédé de commande d'une pompe à vide électrique d'un véhicule électrique destinée à maintenir une pression de vide dans un réservoir de vide, le véhicule électrique étant doté d'un groupe motopropulseur contrôlé par un superviseur, d'une batterie de traction configurée pour alimenter ledit groupe motopropulseur électrique , d'une batterie de service configurée pour alimenter le superviseur ainsi qu'un réseau de bord du véhicule et des calculateurs, le véhicule électrique étant doté en outre d'un convertisseur DC/DC permettant à la batterie de traction de recharger la batterie de service et configuré pour alimenter notamment le superviseur, le réseau de bord du véhicule et les calculateurs, le véhicule électrique comportant un mode de pilotage doté au moins d'un état dit «OFF» dans lequel aucun des composants précités n'est alimenté en tension, un état dit «+APC» dans lequel la batterie de service alimente le superviseur ainsi que le réseau de bord RB du véhicule et les calculateurs, un état dit «READY» dans lequel la batterie de traction alimente en tension le groupe motopropulseur ainsi que le convertisseur DC/DC, caractérisé en ce que la pompe à vide est alimentée en tension uniquement par le convertisseur DC/DC lorsque le véhicule électrique se trouve dans l'état «READY».

Des caractéristiques optionnelles de l'invention, complémentaires ou de substitution sont énoncées ci-après.

Selon certaines caractéristiques, le superviseur commande la mesure de la pression de vide P dans le réservoir de vide lorsque le véhicule électrique se trouve dans l'état «+APC» ou «READY», ladite pression P correspondant à un niveau d'aspiration.

Selon d'autres caractéristiques, le superviseur commande l'alimentation de la pompe à vide lorsque le véhicule électrique se trouve dans l'état «READY», et lorsque la pression de vide dans le réservoir de vide est inférieure en valeur absolue à une première valeur seuil P0.

Selon d'autres caractéristiques, le superviseur interdit l'alimentation de la pompe à vide lorsque le véhicule électrique se trouve dans l'état «+APC», et lorsque la pression de vide dans le réservoir de vide est inférieure en valeur absolue à une première valeur seuil P0.

Selon d'autres caractéristiques, le superviseur interdit l'alimentation de la pompe à vide lorsque la pression de vide dans le réservoir de vide est supérieure en valeur absolue à une seconde valeur seuil P1.

Selon d'autres caractéristiques, la pompe à vide est arrêtée lorsque le véhicule électrique passe à l'état «OFF».

Selon d'autres caractéristiques, la tension aux bornes de la batterie de service est inférieure à 13 V.

Selon d'autres caractéristiques, la tension aux bornes de la batterie de traction est comprise entre 350 et 450 V.

D'autres avantages et particularités de l'invention apparaîtront à la lecture de la description détaillée de mises en œuvre et de modes de réalisation nullement limitatifs, et des dessins annexés suivants :
[Fig.1] Cette figure représente un schéma de l'alimentation électrique d'un véhicule électrique selon un mode de réalisation de l'invention.
[Fig.2] Cette figure représente un diagramme récapitulatif du fonctionnement d'une pompe à vide selon un mode de réalisation de l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites même si cette sélection est isolée au sein d'une phrase comprenant ces autres caractéristiques, si cette sélection de caractéristiques est suffisante pour conférer un avantage technique ou pour différencier l'invention par rapport à l'information de la technique antérieure.

Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'information de la technique antérieure.

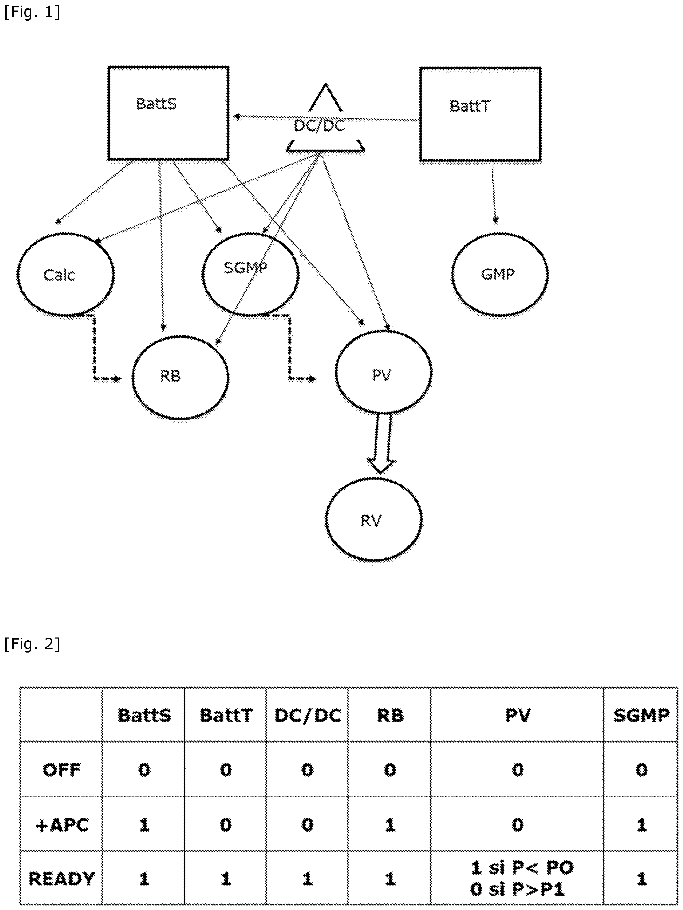

Selon l'invention et tel que représenté sur la figure 1, un véhicule électrique VHL est équipé d'une pompe à vide électrique PV destinée à maintenir une pression de vide dans un réservoir de vide RV.

Le véhicule électrique est classiquement doté d'un groupe motopropulseur électrique GMP contrôlé par un superviseur SGMP, d'une batterie de traction BattT configurée pour alimenter ledit groupe motopropulseur, d'une batterie de service BattS configurée pour alimenter le superviseur SGMP ainsi qu'un réseau de bord RB du véhicule et des calculateurs Calc.

Le véhicule électrique est doté en outre d'un convertisseur DC/DC permettant à la batterie de traction BattT de recharger la batterie de service BattS et configuré pour alimenter notamment le superviseur SGMP, le réseau de bord RB du véhicule et les calculateurs Calc.

Le véhicule électrique comporte aussi un mode de pilotage doté au moins d'un état dit «OFF» dans lequel aucun des composants précités n'est alimenté en tension, un état dit «+APC» dans lequel la batterie de service BattS alimente le superviseur SGMP ainsi que le réseau de bord RB du véhicule et les calculateurs Calc, un état dit «READY» dans lequel la batterie de traction BattT alimente en tension le groupe motopropulseur GMP ainsi que le convertisseur DC/DC.

Le véhicule électrique VHL selon l'invention est donc assujetti à trois états principaux.

L'état «OFF» correspond à un état dans lequel le conducteur n'a rien actionné.

L'état «+APC» correspond à un état dans lequel le conducteur appuie sur le bouton «start» sans appuyer sur la pédale de frein. Les divers calculateurs du véhicule et le superviseur du groupe motopropulseur GMP sont alimentés par la batterie de service BattS.

Comme ils sont en fonctionnement, ils peuvent commencer leurs activités respectives. La radio est alimentée, les accessoires sont alimentés, mais le moteur de traction ne peut pas fournir de couple de traction, le moteur électrique n'est pas alimenté en courant de traction.

En l'état «+APC» tout le réseau de bord est alimenté par la batterie de service, mais la batterie de traction n'alimente rien du tout, les relais de la batterie de traction restent ouverts.

Ainsi, le moteur électrique de traction du véhicule n'est pas alimenté en courant de traction et le convertisseur DC/DC ne convertit pas la tension de la batterie de traction en tension, pour supporter ou recharger la batterie de service, puisque la batterie de traction n'envoie pas de courant au reste du véhicule électrique.

L'état «READY» correspond à un état dans lequel le conducteur appuie sur le bouton «START» en appuyant sur la pédale de frein. Les divers calculateurs du véhicule et le superviseur SGMP sont alimentés par la batterie de service. Ils sont en fonctionnement et peuvent commencer leurs activités respectives.

Les relais de la batterie de traction sont fermés, donc le convertisseur DC/DC reçoit du courant de la batterie de traction et convertit le courant de la batterie de traction en courant pour le réseau de bord.

Donc le convertisseur recharge la batterie de service ou supporte en tension la batterie de service. Le moteur électrique est lui aussi alimenté en courant par la batterie de traction, donc il attend que le conducteur passe le levier en mode «DRIVE» ou en mode «REAR» pour fournir du couple à la chaine de traction.

Dans un véhicule électrique, il y a deux batteries.

La batterie de service alimente le réseau de bord du véhicule. Quand la batterie de service est pleinement chargée, sa tension est souvent comprise entre 12,6 et 13V. Mais quand la batterie de service se décharge sa tension peut chuter sous les 12V.

Si la tension est comprise entre 12 volts et 12,3 volts, alors la batterie doit être rechargée.

Si la tension est supérieure à 13 volts elle est en surcharge.

Si la tension est inférieure à 12 volts, cela veut dire que la batterie est déchargée ou en fin de vie.

La batterie de traction alimente le moteur électrique de traction et le convertisseur DC/DC.

La tension de la batterie de traction dépend de son état de chargement.

Sa tension peut varier de 350V (quand l'état de charge de cette batterie de traction est inférieur à 5%) à 450V (quand l'état de charge de cette batterie de traction est à 100% de charge).

Le convertisseur de tension DC/DC prélève du courant de la batterie de traction, le transforme et alimente en courant le réseau de bord.

Il prélève ainsi du courant à une tension comprise entre 350V et 450V, pour le transformer et alimenter le réseau de bord avec un courant à une tension de 13,9V.

Cette tension de 13,9V alimente tout le réseau de bord, dont les accessoires, les calculateurs et les différents accessoires du véhicule.

Ce courant envoyé par le convertisseur DC/DC permet aussi de recharger la batterie de service.

En fait, quand le convertisseur alimente le réseau de bord, comme la batterie de service est branchée au réseau de bord, le fait que la tension d'alimentation du convertisseur DC/DC soit supérieure à la tension de la batterie de service, fait que la batterie de service se recharge automatiquement quand le convertisseur DC/DC est en fonctionnement.

Concernant le fonctionnement de la pompe à vide électrique, le superviseur GMP reçoit l'information du niveau de vide dans la réserve de vide.

Quand cette réserve de vide est inférieure à un certain niveau de pression P0 (niveau de pression qui est calibré lors du développement du groupe motopropulseur), le superviseur SGMP demande l'activation de la pompe à vide électrique.

Et quand la réserve de vide dépasse un certain niveau de pression P1 (niveau de pression qui est calibré lors du développement du groupe motopropulseur), le superviseur SGMP demande l'arrêt de la pompe à vide électrique.

Selon la configuration conventionnelle, quand le conducteur passait à l'état «+APC», le superviseur SGMP vérifiait le niveau de la réserve de vide et si cette dernière était sous un certain niveau, le superviseur GMP demandait à la pompe à vide électrique de remplir la réserve de vide. Le véhicule ne roulait toutefois pas encore, puisque le véhicule n'était qu'à l'état «+APC».

Toujours selon la configuration conventionnelle, dans l'état «+APC» la tension de la batterie de service était forcément inférieure à 13V et parfois même inférieure à 12,5V. Donc la pompe à vide électrique pouvait être parfois alimentée à une tension inférieure à 12,5V, qui lui permettait de fonctionner certes, mais pas au bon régime de fonctionnement.

La pompe risquait alors de s'user prématurément et de casser.

Selon la configuration de l'invention, le superviseur SGMP reçoit toujours l'information de la pression dans la réserve de vide dès que le véhicule passe à l'état «+APC».

Toutefois, le superviseur SGMP ne peut demander le fonctionnement de la pompe à vide que lorsque le véhicule est à l'état «READY».

Ainsi, à l'état «READY», le convertisseur DC/DC est en fonctionnement et donc le réseau de bord est alimenté avec une tension de 13,9V et non plus 12,5V - 13V.

Le régime de la pompe à vide électrique est au bon niveau de fonctionnement pour garantir sa bonne plage de régime de fonctionnement et donc sans risquer de dégrader prématurément la pompe à vide électrique.

L'information du niveau de pression de vide dans la réserve de vide est perpétuellement mesurée et envoyée en continu au superviseur GMP dès lors que le véhicule est dans l'état «+APC» ou «READY».

Le procédé de commande est résumé dans le diagramme représenté en figure 2.

Tant que la pression de la réserve de vide est supérieure à un niveau minimum de pression P0, en valeur absolue, car c'est un niveau d'aspiration, le superviseur ne demande pas l'activation de la pompe à vide électrique.

Lorsque cette pression de la réserve de vide passe à un niveau inférieur à un niveau minimum de pression P0, en valeur absolue, car c'est un niveau d'aspiration, et lorsque le véhicule n'est pas à l'état «READY», le superviseur ne demande pas l'activation de la pompe à vide électrique.

Lorsque cette pression de la réserve de vide passe à un niveau inférieur à un niveau minimum de pression P0, en valeur absolue, car c'est un niveau d'aspiration, et lorsque le véhicule est à l'état «READY», le superviseur demande l'activation de la pompe à vide électrique.

Lorsque cette pression de la réserve de vide dépasse un niveau maximum de pression P1, en valeur absolue car c'est un niveau d'aspiration, le superviseur demande l'arrêt de la pompe à vide électrique.

Si la pompe à vide est en fonctionnement et que le conducteur passe à l'état «OFF», le fonctionnement de la pompe est arrêté immédiatement car la pompe n'est plus alimentée en courant électrique.

A noter que le conducteur ne peut pas passer de l'état «READY» à l'état «+APC», car quand le véhicule est à l'état «READY» et que le conducteur coupe le contact en appuyant sur le bouton «start/stop», le véhicule tombe à l'état «OFF».

Le but est de garantir le fonctionnement de la Pompe à vide électrique dans sa bonne plage de tension d'alimentation, afin de garantir la tenue dans le temps de cette pompe à vide électrique.

A noter, les différentes caractéristiques, formes, variantes et modes de réalisation de l'invention peuvent être associés les uns avec les autres, selon diverses combinaisons dans la mesure où ils ne sont pas incompatibles ou exclusifs les uns des autres. La portée de la protection est définie uniquement par les revendications annexées.

## Revendications

1. Procédé de commande d'une pompe à vide électrique (PV) d'un véhicule électrique (VHL) destinée à maintenir une pression de vide dans un réservoir de vide (RV), le véhicule électrique étant doté d'un groupe motopropulseur électrique (GMP) contrôlé par un superviseur (SGMP), d'une batterie de traction (BattT) configurée pour alimenter ledit groupe motopropulseur, d'une batterie de service (BattS) configurée pour alimenter le superviseur (SGMP) ainsi qu'un réseau de bord (RB) du véhicule et des calculateurs (Calc), le véhicule électrique étant doté en outre d'un convertisseur (DC/DC) permettant à la batterie de traction (BattT) de recharger la batterie de service (BattS) et configuré pour alimenter notamment le superviseur (SGMP), le réseau de bord (RB) du véhicule et les calculateurs (Calc), le véhicule électrique comportant un mode de pilotage doté au moins d'un état dit «OFF» dans lequel aucun des composants précités n'est alimenté en tension, un état dit «+APC» dans lequel la batterie de service (BattS) alimente le superviseur (SGMP) ainsi que le réseau de bord (RB) du véhicule et les calculateurs (Calc), un état dit «READY» dans lequel la batterie de traction (BattT) alimente en tension le groupe motopropulseur (GMP) ainsi que le convertisseur (DC/DC), **caractérisé en ce que** la pompe à vide est alimentée en tension uniquement par le convertisseur (DC/DC) lorsque le véhicule électrique se trouve dans l'état «READY».

2. Procédé de commande d'une pompe à vide (PV) selon la revendication 1, **caractérisé en ce que** le superviseur (SGMP) commande la mesure de la pression de vide P dans le réservoir de vide (RV) lorsque le véhicule électrique se trouve dans l'état «+APC» ou «READY», ladite pression P correspondant à un niveau d'aspiration.

3. Procédé de commande d'une pompe à vide (PV) selon la revendication 2, **caractérisé en ce que** le superviseur (SGMP) commande l'alimentation de la pompe à vide lorsque le véhicule électrique se trouve dans l'état «READY», et lorsque la pression de vide dans le réservoir de vide (RV) est inférieure en valeur absolue à une première valeur seuil P0.

4. Procédé de commande d'une pompe à vide (PV) selon la revendication 2 ou 3, **caractérisé en ce que** le superviseur (SGMP) interdit l'alimentation de la pompe à vide lorsque le véhicule électrique se trouve dans l'état «+APC», et lorsque la pression de vide dans le réservoir de vide (RV) est inférieure en valeur absolue à une première valeur seuil P0.

5. Procédé de commande d'une pompe à vide (PV) selon l'une quelconque des revendications 2 à 4, **caractérisé en ce que** le superviseur (SGMP) interdit l'alimentation de la pompe à vide lorsque la pression de vide dans le réservoir de vide (RV) est supérieure en valeur absolue à une seconde valeur seuil P1.

6. Procédé de commande d'une pompe à vide (PV) selon l'une quelconque des revendications 2 à 5, **caractérisé en ce que** la pompe à vide est arrêtée lorsque le véhicule électrique passe à l'état «OFF».

7. Procédé de commande d'une pompe à vide (PV) selon l'une quelconque des revendications précédentes, **caractérisé en ce que** la tension aux bornes de la batterie de service (BattS) est inférieure à 13 V.

8. Procédé de commande d'une pompe à vide (PV) selon l'une quelconque des revendications précédentes, **caractérisé en ce que** la tension aux bornes de la batterie de traction (BattT) est comprise entre 350 et 450 V.

## Patentansprüche

1. Verfahren zur Steuerung einer elektrischen Vakuumpumpe (PV) eines Elektrofahrzeugs (VHL), die dazu bestimmt ist, einen Vakuumdruck in einem Vakuumtank (RV) aufrechtzuerhalten, wobei das Elektrofahrzeug mit einem elektrischen Antriebsstrang (GMP) ausgestattet ist, der von einem Supervisor (SGMP) gesteuert wird. , eine Traktionsbatterie ( BattT ), die so konfiguriert ist, dass sie den Antriebsstrang mit Strom versorgt, eine Servicebatterie ( BattS ), die so konfiguriert ist, dass sie den Supervisor (SGMP) sowie ein Bordnetz (RB) des Fahrzeugs und die Computer (Calc) mit Strom versorgt Das Fahrzeug ist außerdem mit einem Wandler (DC/DC) ausgestattet, der es der Traktionsbatterie ( BattT ) ermöglicht, die Servicebatterie ( BattS ) aufzuladen , und der so konfiguriert ist, dass er insbesondere den Supervisor (SGMP) und das Bordnetz (RB) des Fahrzeugs versorgt und die Computer (Calc), wobei das Elektrofahrzeug einen Steuermodus umfasst, der mit mindestens einem Zustand namens "OFF" ausgestattet ist, in dem keine der oben genannten Komponenten mit Spannung versorgt wird, einem Zustand namens "+APC", in dem die Servicebatterie ( BattS ) versorgt den Supervisor (SGMP) sowie das Bordnetz (RB) des Fahrzeugs und die Computer (Calc), ein Zustand namens "READY", in dem die Traktionsbatterie ( BattT ) Spannung an den Antriebsstrang (GMP) liefert. sowie dem Wandler (DC/DC), **dadurch gekennzeichnet, dass** die Vakuumpumpe nur durch den Wandler (DC/DC) mit Spannung versorgt wird, wenn sich das Elektrofahrzeug im Zustand "READY" befindet.

2. Verfahren zur Steuerung einer Vakuumpumpe (PV) nach Anspruch 1, **dadurch gekennzeichnet, dass** der Supervisor (SGMP) die Messung des Vakuumdrucks P im Vakuumtank (RV) steuert, wenn sich das Elektrofahrzeug im "+ APC" oder " "BEREIT" -Zustand , wobei der Druck P einem Saugniveau entspricht.

3. Verfahren zur Steuerung einer Vakuumpumpe (PV) nach Anspruch 2, **dadurch gekennzeichnet, dass** der Supervisor (SGMP) die Versorgung der Vakuumpumpe steuert, wenn sich das Elektrofahrzeug im Zustand "BEREIT " befindet und wenn der Vakuumdruck im Vakuumtank ansteigt (RV) ist im absoluten Wert kleiner als ein erster Schwellenwert P0.

4. Verfahren zur Steuerung einer Vakuumpumpe (PV) nach Anspruch 2 oder 3, **dadurch gekennzeichnet, dass** der Supervisor (SGMP) die Versorgung der Vakuumpumpe verbietet, wenn sich das Elektrofahrzeug im Zustand "+ APC" befindet und wenn der Vakuumdruck ansteigt im Vakuumtank (RV) ist betragsmäßig kleiner als ein erster Schwellenwert P0.

5. Verfahren zur Steuerung einer Vakuumpumpe (PV) nach einem der Ansprüche 2 bis 4, **dadurch gekennzeichnet, dass** der Supervisor (SGMP) die Versorgung der Vakuumpumpe verbietet, wenn der Vakuumdruck im Vakuumtank Vakuum (RV) absolut größer ist Wert als ein zweiter Schwellenwert P1.

6. Verfahren zur Steuerung einer Vakuumpumpe (PV) nach einem der Ansprüche 2 bis 5, **dadurch gekennzeichnet, dass** die Vakuumpumpe gestoppt wird, wenn das Elektrofahrzeug in den "AUS "-Zustand geht.

7. Verfahren zur Steuerung einer Vakuumpumpe (PV) nach einem der vorhergehenden Ansprüche, **dadurch gekennzeichnet, dass** die Spannung an der Servicebatterie ( BattS ) weniger als 13 V beträgt.

8. Verfahren zur Steuerung einer Vakuumpumpe (PV) nach einem der vorhergehenden Ansprüche, **dadurch gekennzeichnet, dass** die Spannung an der Traktionsbatterie ( BattT ) zwischen 350 und 450 V beträgt.

## Claims

1. Method for controlling an electric vacuum pump (PV) of an electric vehicle (VHL) intended to maintain a vacuum pressure in a vacuum tank (RV), the electric vehicle being provided with an electric powertrain (GMP) controlled by a supervisor (SGMP), a traction battery ( BattT ) configured to supply said powertrain, a service battery (BattS) configured to supply the supervisor (SGMP) as well as an on-board network (RB) of the vehicle and computers (Calc), the electric vehicle being further provided with a converter (DC/DC) allowing the traction battery (BattT) to recharge the service battery ( BattS ) and configured to supply in particular the supervisor (SGMP), the on-board network (RB) of the vehicle and the computers (Calc), the electric vehicle comprising a control mode provided with at least one state called "OFF" in which none of the aforementioned components is supplied with voltage, a state called "+APC" in which the service battery ( BattS ) supplies the supervisor (SGMP) as well as the on-board network (RB) of the vehicle and the computers (Calc), a state called "READY" in which the traction battery ( BattT ) supplies voltage to the powertrain (GMP) as well as the converter (DC/DC), **characterized in that** the vacuum pump is supplied with voltage only by the converter (DC/DC) when the electric vehicle is in the "READY" state.

2. Method for controlling a vacuum pump (PV) according to claim 1, **characterized in that** the supervisor (SGMP) controls the measurement of the vacuum pressure P in the vacuum tank (RV) when the electric vehicle is in the "+ APC" or "READY" state, said pressure P corresponding to a suction level.

3. Method for controlling a vacuum pump (PV) according to claim 2, **characterized in that** the supervisor (SGMP) controls the supply of the vacuum pump when the electric vehicle is in the "READY " state, and when the vacuum pressure in the vacuum reservoir (RV) is lower in absolute value than a first threshold value P0.

4. Method for controlling a vacuum pump (PV) according to claim 2 or 3, **characterized in that** the supervisor (SGMP) prohibits the supply of the vacuum pump when the electric vehicle is in the "+ APC" state, and when the vacuum pressure in the vacuum reservoir (RV) is lower in absolute value than a first threshold value P0.

5. Method for controlling a vacuum pump (PV) according to any one of claims 2 to 4, **characterized in that** the supervisor (SGMP) prohibits the supply of the vacuum pump when the vacuum pressure in the vacuum tank (RV) is greater in absolute value than a second threshold value P1.

6. Method for controlling a vacuum pump (PV) according to any one of claims 2 to 5, **characterized in that** the vacuum pump is stopped when the electric vehicle switches to the "OFF " state.

7. Method for controlling a vacuum pump (PV) according to any one of the preceding claims, **characterized in that** the voltage across the terminals of the service battery ( BattS ) is less than 13 V.

8. Method for controlling a vacuum pump (PV) according to any one of the preceding claims, **characterized in that** the voltage across the traction battery ( BattT ) is between 350 and 450 V.
